Europäisches Patentamt

European Patent Office

Office européen des brevets

(19)

(11) Numéro de publication : **0 105 890**
**B1**

(12) **FASCICULE DE BREVET EUROPÉEN**

(45) Date de publication du fascicule du brevet :
04.03.87

(51) Int. Cl.⁴ : **C 22 C 1/09**, D 01 F 11/10

(21) Numéro de dépôt : **83901204.4**

(22) Date de dépôt : **14.04.83**

(86) Numéro de dépôt international :
**PCT/FR 83/00068**

(87) Numéro de publication internationale :
**WO/8303625 (27.10.83 Gazette 83/25)**

(54) PROCEDE DE FABRICATION DE MATERIAUX COMPOSITES COMPORTANT UNE MATRICE EN UN ALLIAGE LEGER, ET PRODUITS OBTENUS PAR CE PROCEDE.

(30) Priorité : 15.04.82 FR 8206448
17.09.82 FR 8215689

(43) Date de publication de la demande :
25.04.84 Bulletin 84/17

(45) Mention de la délivrance du brevet :
04.03.87 Bulletin 87/10

(84) Etats contractants désignés :
CH DE FR GB LI

(56) Documents cités :
FR-A- 2 028 338
FR-A- 2 259 916
FR-A- 2 297 255
GB-A- 1 295 289
GB-A- 1 403 863

(73) Titulaire : **MESSIER FONDERIE D'ARUDY**

**F-64260 Arudy (FR)**

(72) Inventeur : **ROCHER, Jean-Philippe**
**Résidence Formanoir Tour 5, Appartement 437**
**F-33600 Pessac (FR)**
Inventeur : **QUENISSET, Jean-Michel**
**17, Avenue des Palombes**
**F-33600 Pessac (FR)**
Inventeur : **PAILLER, René**
**29, Allée de la Lande**
**F-33610 Cestas (FR)**
Inventeur : **NASLAIN, Roger**
**Résidence du Pontet 'Les Joncs' Avenue du Pontet**
**F-33600 Pessac (FR)**

(74) Mandataire : **Chevallier, Robert Marie Georges**
**Société SEDIC 40, rue Victor Basch**
**F-92120 Montrouge (FR)**

Jouve, 18, rue St-Denis, 75001 Paris, France

## Description

La présente invention concerne les procédés d'élaboration de matériaux composites, et plus particulièrement les matériaux composites comportant un premier composant fibreux pour former l'ossature du matériau composite, et un second composant constitué d'un alliage léger jouant le rôle de matrice et mouillant à l'état liquide le premier composant, après prétraitement par un agent fluoré dudit premier composant, afin d'obtenir ce matériau composite avec toutes les qualités qui sont inhérentes à ce genre de matériau. Le renforcement des alliages légers par les fibres à hautes caractéristiques mécaniques n'a pas connu jusqu'ici un développement comparable à celui des matières plastiques, en raison principalement des difficultés rencontrées, sur le plan technique, lors de sa mise en œuvre.

Pourtant les composites à matrice métallique présentent certaines caractéristiques spécifiques intéressantes : possibilité d'emploi en température, tenue à la fatigue, absence de vieillissement, stabilité vis-à-vis de nombreux milieux, conductivités électrique et thermique élevées, reproductibilité des caractéristiques, etc.

Parmi ces matériaux, les composites à matrice d'aluminium renforcée par des fibres telles que les fibres à base de carbone (carbone, carbure de silicium) présentent un intérêt particulier en raison, d'une part, des caractéristiques mécaniques élevées, de la disponibilité, de l'aptitude au tissage et du prix relativement modéré de ce type de fibres, et, d'autre part, de la faible densité, du bas point de fusion et du faible coût des alliages d'aluminium. Le développement de ce type de composites est actuellement considérablement freiné par le fait que leur procédé d'élaboration le plus simple, l'imprégnation par voie liquide, est compliqué par le mauvais mouillage de ces fibres par la plupart des alliages d'aluminium à l'état liquide, ainsi que par la présence de réactions chimiques fibre-matrice tendant à diminuer le pouvoir renforçant des fibres.

Il est connu, en effet, que le graphite (ainsi que la plupart des autres formes de carbone) n'est pas spontanément mouillé par l'aluminium liquide (et la plupart de ses alliages usuels, notamment de fonderie) aux températures inférieures à 1 000 °C. Il en résulte que l'aluminium liquide n'est pas susceptible de s'étaler sur une surface de graphite ou de pénétrer par capillarité au sein des pores, dont certains sont de très petites dimensions, présents dans les mèches de fibres de carbone ou dans les préformes poreuses multidirectionnelles confectionnées à partir d'elles. Aux températures où l'aluminium mouille le graphite (θ > 1 000 °C), se produit une réaction chimique très rapide, avec précipitation de carbure d'aluminium, se traduisant par un endommagement mécanique irréversible des fibres. Il est à noter d'ailleurs que graphite et aluminium réagissent ensemble mais avec une vitesse plus lente, à des températures beaucoup plus basses (dès 550 °C), la formation de Al4C3 conduisant à une mauvaise adhésion fibre-matrice (donc à une tendance au délaminage et à de mauvaises propriétés transversales) et à une fragilisation de la matrice.

Les fibres à base de carbure de silicium, telles que par exemple les fibres connues dans le commerce sous la dénomination NICALON® et fournies par la Société Japonaise NIPPON CARBON, et constituées d'un mélange de carbure de silicium, de carbone et de silice, bien qu'ayant une meilleure compatibilité chimique avec les métaux que celles de carbone pur, sont également mal mouillées par l'aluminium liquide (et la plupart de ses alliages usuels).

Pour tenter de pallier ces difficultés, un effort de recherche important a été consacré à l'élaboration des composites fibreux à matrice base aluminium, par voie liquide. Il convient, d'abord, de distinguer le cas des fibres de diamètre important comme les filaments de bore (nus ou revêtus) ou de carbure de silicium dont le diamètre est généralement compris entre 100 et 200 µm et qui sont obtenus par dépôt chimique en phase vapeur sur un substrat filamentaire de tungstène ou de carbone. Les préformes réalisées à l'aide de ces produits, de forme nécessairement très simple compte-tenu de la rigidité de ces filaments, sont caractérisées par des pores très volumineux qui se laissent assez facilement pénétrer par l'aluminium liquide, en faisant appel éventuellement à une légère pression (imprégnation par voie liquide ou même semi-liquide). Ces filaments, en raison de leur morphologie et de leurs caractéristiques mécaniques, sont indiqués pour la réalisation de produits composites longs ou plats, mais se prêtent mal à la réalisation de pièces, en aluminium armé, de formes complexes telles celles qui relèvent habituellement du domaine de la fonderie des alliages légers. Enfin, dans l'état actuel de la technologie, ces filaments sont des produits très coûteux et dont l'approvisionnement est difficile. Bien qu'il puisse être utilisé pour toute association entre alliage léger, et notamment d'aluminium, et matériaux présentant une surface à base de carbone ou de carbures, par exemple pour les renforts constitués de filaments de gros diamètre qui viennent d'être évoqués, le procédé selon la présente invention s'adresse préférentiellement à l'imprégnation par voie liquide des renforts fibreux constitués de fibres de petit diamètre (en général de 7 à 20 µm) comme les fibres à base de carbone ou de carbure de silicium (ou éventuellement d'alumine revêtue de carbure) utilisées sous la forme de mèches contenant plusieurs centaines ou même plusieurs milliers de brins élémentaires. Dans ces mèches, ou dans les préformes mono- ou multidirectionnelles utilisées à partir de ces mèches, les pores sont de taille extrêmement petite, souvent de l'ordre de quelques micromètres seulement, avec pour conséquence que l'aluminium y pénètre très facilement.

En raison de leur souplesse de mise en œuvre (sous la forme de feutres, de tissus ou d'architectures multi-directionnelles) de leur disponibilité et de leur coût relativement modéré, ce sont ces fibres qui seront utilisées préférentiellement pour réaliser les renforts fibreux des alliages légers armés, notamment des pièces de forme complexe réalisées par les techniques de la fonderie.

Comme cela a été rappelé plus haut, l'aluminium (ou la plupart de ses alliages communs) n'imprègne pas spontanément, dans les conditions habituelles de mise en œuvre, les préformes fibreuses complexes, ou même une simple mèche multibrins, lorsqu'elles sont constituées de fibres de faible diamètre (fibres à base de carbone ou de carbure de silicium, notamment). Pour favoriser le mouillage de celles-ci par l'aluminium liquide, un pré-traitement des fibres (ou l'addition à la matrice d'éléments d'alliage spécifiques) est indispensable. Malgré l'importance de l'effort de recherche qui a été consacré à ce sujet, au cours des vingt dernières années, les solutions qui ont été proposées sont ou de mise en œuvre délicate ou limitées à des produits de morphologie extrêmement simple (fils, feuilles de faible épaisseur).

C'est ainsi qu'il a été proposé de pré-traiter les fibres de carbone en les immergeant dans un bain de métal alcalin (sodium ou alliage sodium-potassium) puis d'étain (additionné de 2 % de magnésium). En variante, le prétraitement peut être réalisé en phase gazeuse. Ainsi pré-traité, le renfort fibreux, dont la surface des fibres aurait acquis un caractère métallique par insertion d'alcalin, est spontanément mouillé par l'aluminium liquide vers 700-800 °C. Ce procédé a toutefois l'inconvénient de faire appel à des produits de manipulation délicate et doit être intégralement conduit en atmosphère inerte (argon, par exemple). De plus, son application semble avoir été limitée jusqu'ici à l'élaboration, à l'échelle du laboratoire, de fils composites carbone-aluminium de faible diamètre.

De même, on a préconisé de déposer, à la surface des fibres de carbone, un film mince d'un alliage ou d'un composé défini du titane, par dépôt chimique en phase vapeur (CVD). Tel est le cas de procédés faisant appel à un dépôt de carbure de titane ou mieux d'un alliage titane-bore dont la composition n'est pas connue avec précision mais qui pourrait être l'un des deux borures de titane TiB et TiB2. Cet alliage est formé à la surface de fibres par co-réduction, en phase gazeuse, de BCl3 et de TiCl4 par la vapeur de zinc à une température de 600-700 °C. Ainsi pré-traitée, une mèche de fibres de carbone est spontanément mouillé par l'aluminium liquide (alliage Al-201, par exemple) à condition de n'avoir pas été mise en contact avec l'air entre les opérations de pré-traitement et d'imprégnation. Là encore, le procédé doit donc être intégralement conduit en atmosphère contrôlée (argon sec). Par ailleurs, la mise en œuvre du procédé a été, à notre connaissance, limitée à la fabrication de produits de formes extrêmement simples (fils, feuilles). Cette technique, si elle a l'avantage de promouvoir effectivement le mouillage des fibres de carbone par l'aluminium et de former à leur surface une barrière les protégeant contre une attaque excessive de la part de la matrice, a, en revanche, l'inconvénient de faire appel à une autre technologie délicate (CVD à partir de fluides corrosifs, travail sous argon) peu compatible notamment avec celle de la fonderie des alliages légers (voir aussi FR-A-2 297 225).

Dans un même ordre d'idée, il a été suggéré de recouvrir la surface des fibres de carbone à l'aide d'un film d'un métal comme le nickel, le cuivre, l'argent ou le tantale. Le dépôt métallique est réalisé soit par CVD soit par électrolyse. Ce procédé a deux types d'inconvénients. La densité élevée des métaux préconisés conduit à augmenter de manière notable celle des composites correspondants, même dans le cas où le dépôt est de faible épaisseur, notamment lorsque la fraction volumique de fibres est importante. Par ailleurs, il se forme, le plus souvent, des composés intermétalliques entre l'aluminium et le métal du dépôt qui fragilisent la matrice. Enfin, dans la mesure où le dépôt se dissout dans la matrice, au moment de l'imprégnation, les fibres ne sont plus ultérieurement protégées contre une attaque chimique de la part de la matrice. Il convient de citer, parmi ces procédés, une technique particulièrement simple consistant à imprégner les fibres à l'aide d'une suspension colloïdale d'un métal comme l'argent. Cette technique a l'avantage de conduire à des dépôts de très faible épaisseur et qui demeurent actifs à l'air. Toutefois, l'imprégnation ultérieure par l'aluminium liquide nécessite, pour être complète, l'emploi de pressions relativement importantes (travail à la presse) difficilement compatible, dans l'état actuel de l'art, avec notamment la fonderie des alliages légers.

L'invention a donc pour objet un procédé d'élaboration de matériaux composites comprenant un premier composant de renforcement à base de carbone ou d'un carbure, ou revêtu en surface de carbone ou d'un carbure, et un deuxième composant jouant le rôle de matrice constitué par un alliage léger, caractérisé en ce que, dans une première étape, on traite le premier composant de renforcement par un agent fluoré contenant au moins un fluorure double d'un élément de transition ou d'un élément métalloïdique, et d'un élément électropositif et, dans une seconde étape, on imprègne le premier composant de renforcement ainsi pré-traité à l'aide du deuxième composant mis à l'état liquide. Selon un aspect plus particulier, l'invention concerne un procédé d'élaboration de matériaux composites comprenant un premier composant fibreux de renforcement appartenant au groupe formé par les fibres à base de carbone, les fibres à base de carbures, y compris le carbure de silicium, les fibres à base de tout matériau réfractaire revêtu de carbone ou carbures, et un deuxième composant constitué par un alliage léger, caractérisé en ce que, dans une première étape, on traite le premier composant fibreux de renforcement par un agent fluoré contenant au moins un fluorure double d'un élément de transition ou d'un élément métalloïdique, et d'un élément électropositif, et dans une seconde étape, on imprègne le premier composant fibreux de renforcement ainsi pré-traité, à l'aide du deuxième composant mis à l'état liquide.

Comme pourra l'apprécier l'homme de l'art, le procédé selon l'invention se distingue nettement des procédés antérieurement préconisés et présente, par rapport à ceux-ci, de nombreux avanta-ges. La mise en œuvre du procédé est, en particulier, parfaitement compatible avec les techniques de la fonderie d'alliages légers, ce qui n'était pas le cas pour les techniques antérieures, ainsi qu'indiqué plus haut. C'est aussi que le prétraitement du renfort fibreux par une ou plusieurs espèces fluorées selon l'invention peut être réalisé à l'air, ledit renfort prétraité conservant une bonne aptitude au mouillage par les alliages légers même s'il est maintenu à l'air pendant un temps relativement long entre l'opération de pré-traitement et celle d'imprégnation. L'opération de prétraitement ne fait appel, en elle-même, à aucune des manipulations délicates qui limitaient l'application des procédés antérieurs (immersion dans les métaux alcatus à l'état liquide ou vapeur, dépôt chimique en phase vapeur à partir de produits corrosifs, électrolyse ignée) puisqu'elle consiste simplement à traiter la mèche ou la préforme fibreuse par la (ou les) espèce(s) fluorées, sous forme solide ou en solution (ou en suspension) dans un liquide, à l'air et à une température qui dépend de la nature de la (ou des) espèce(s) fluorée(s) et de la forme sous laquelle ces espèces sont utilisées, mais qui demeure suffisamment basse pour ne pas altérer de manière notable les fibres, avant d'imprégner le renfort fibreux, ainsi pré-traité, par l'alliage d'aluminium liquide.

Deux flux fluorés ont déjà été préconisés en fonderie d'alliages légers, notamment pour affiner le grain. Toutefois, le procédé selon l'invention se distingue de ce type d'opération dans la mesure où la (ou les) espèce(s) fluorée(s) utilisée(s) pour promouvoir le mouillage des fibres à base de carbone ou de carbures (carbure de silicium, par exemple) par l'aluminium doit (vent) être employée(s) pour pré-traiter les fibres, avant l'imprégnation par le métal liquide et dans des conditions bien précises, et non être simplement ajoutée(s) au métal avant la coulée.

Alors que la plupart des procédés antérieurs n'étaient applicables qu'à l'obtention de fils, de rubans ou de feuilles composites, le procédé selon l'invention permet non seulement d'élaborer de manière plus simple de tels produits, mais, surtout, il peut être appliqué directement à la fabrication de pièces massives à renfort fibreux. Il constitue, de ce fait, un véritable procédé de fonderie d'alliages légers armés de fibres de carbone. Il a été ainsi appliqué, avec succès, à la fabrication de pièces comportant divers types d'armatures fibreuses parmi lesquelles on peut citer : des fibres courtes en vrac à base de carbone ou de carbures (carbure de silicium, par exemple), des feutres secs ou consolidés par une petite quantité de carbone (pyrocarbone, coke de résine ou de brai) ou de carbure, des mèches, des mats, des tissus empilés parallèlement les uns les autres et éventuellement consolidés par du carbone ou de carbure et, enfin, des architectures multi-directionnelles. Dans tous les cas, le renfort fibreux, ainsi pré-traité par le procédé aux espèces fluorées, selon l'invention, a pu être imprégné dans des conditions satisfaisantes.

Divers types de combinaisons fluorées peuvent être utilisées pour le pré-traitement des fibres. C'est le cas notamment des fluorures doubles comportant au moins un élément de transition (comme le titane, le zirconium, le hafnium, le vanadium, le niobium ou le tantale), ou même l'aluminium, associé à un élément électropositif (comme les alcalins, l'ammonium, les alcalino-terreux ou les terres rares). Ces combinaisons fluorées peuvent être utilisées individuellement ou mélangées entre elles ou, encore, être associées à des halogénures (fluorures simples, par exemple) alcalins, alcalino-terreux ou de terres rares de manière à modifier les propriétés physiques du mélange (formation d'eutectiques, par exemple) ou à infléchir les réactions chimiques qui interviennent au moment du pré-traitement du renfort fibreux ou de l'imprégnation par le métal liquide. Il en est de même de l'addition éventuelle de fluorures simples ou complexes de l'aluminium lui-même.

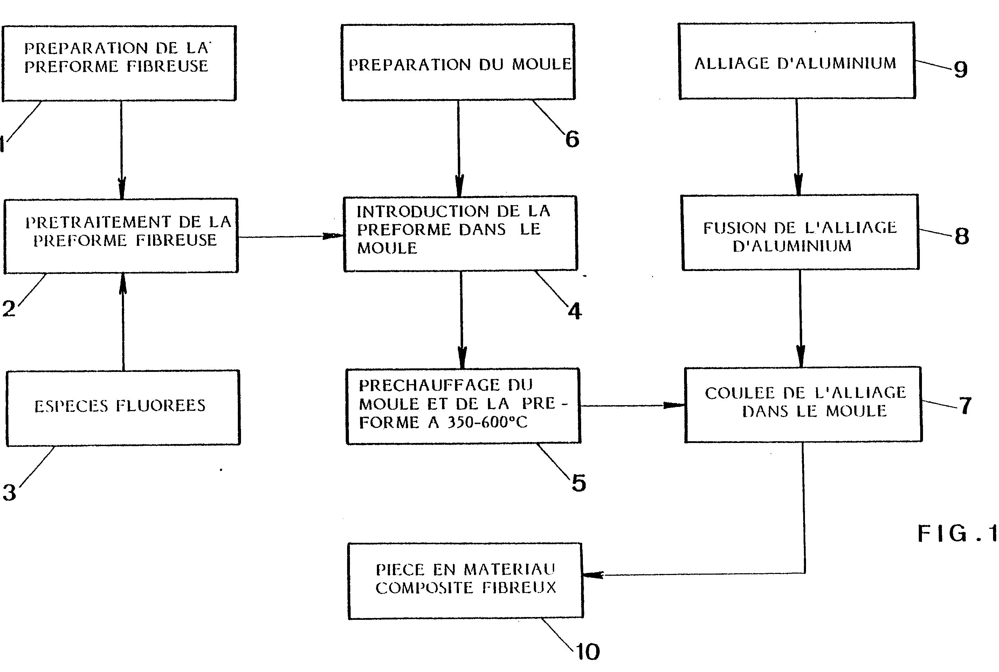

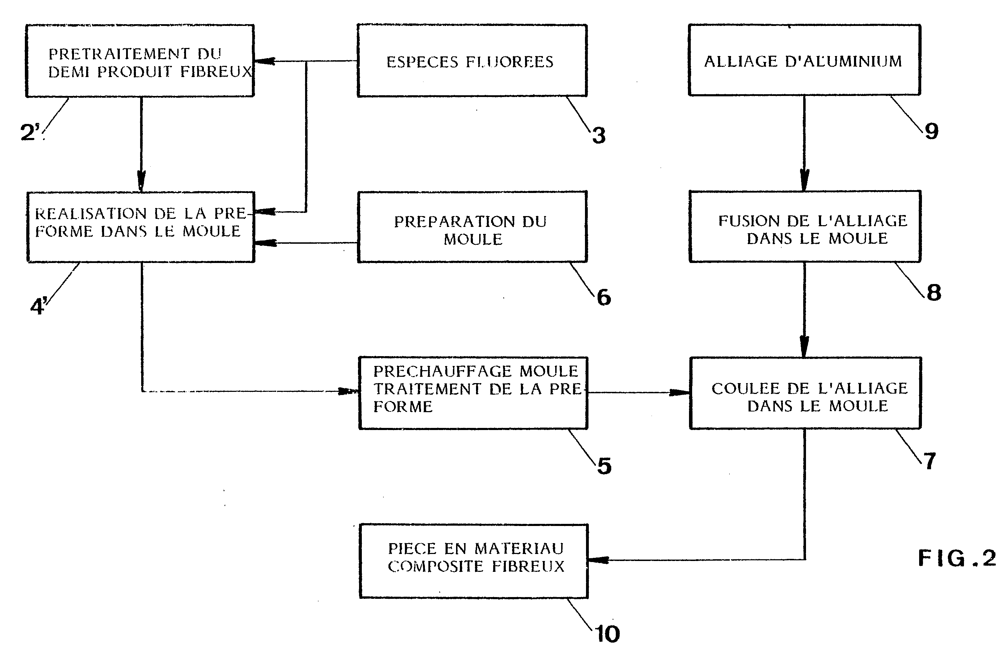

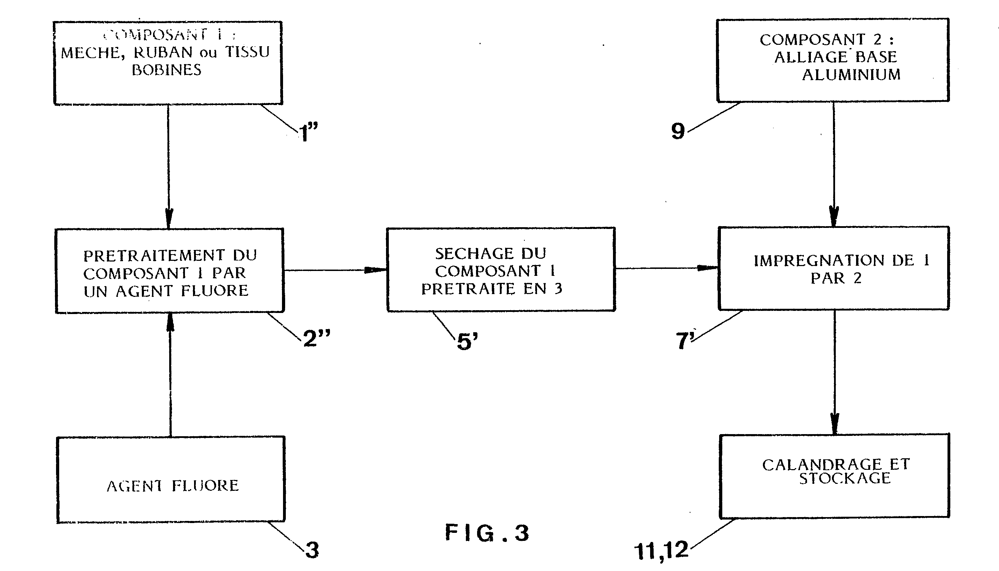

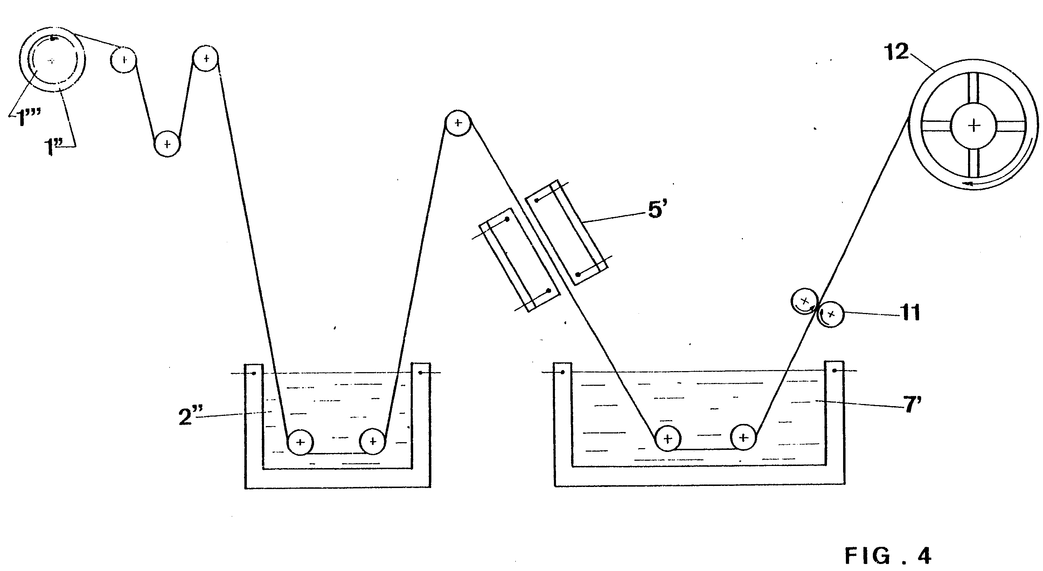

Parmi les composites possibles, celles à base de K2TiF6 ou K2ZrF6, seules ou mélangées avec KBF4 sont apparues particulièrement actives. Le procédé selon l'invention, bien qu'il ait été plus particulièrement développé pour l'imprégnation de renforts réalisés à partir de fibres à base de carbone ou de carbures (carbure de silicium, par exemple), peut être étendu à d'autres fibres à base d'oxydes, comme l'alumine, par exemple, revêtues de carbone ou de carbures susceptibles d'être utilisées pour le renforcement des alliages légers. L'invention sera maintenant décrite à l'aide des figures 1 et 2 représentant, sous la forme de blocs diagrammes, les diverses étapes de deux modes de mise en œuvre, selon l'invention, du procédé d'élaboration de pièces de fonderie en alliage léger renforcé, suivant que l'armature fibreuse est réalisée à l'extérieur du moule (fig. 1) ou au sein même du moule à partir de demi-produits (fig. 2), et à l'aide des figures 3 et 4, dans le cas d'une mise en œuvre en continue des étapes de pré-traitement et d'imprégnation pour la réalisation de fils ou de rubans composites. De plus, le procédé sera illustré par quelques exemples qui ne sauraient en aucun cas limiter la portée de l'invention, ainsi que cela apparaîtra clairement à l'homme de l'art.

En se référant à la figure 1, une préforme fibreuse est réalisée 1 en vue de renforcer tout ou partie de la pièce à élaborer, à l'aide des techni-ques de mise en œuvre des matériaux fibreux à hautes performances mécaniques, à partir des fibres elles-mêmes, ou mieux, à partir de demi-produits fibreux (feutres, mats, tissus, constructions multi-directionnelles de fibres ou de baguettes). Elle peut être sèche ou consolidée, par exemple avec une petite quantité de carbone (pyrocarbone résultant de la pyrolyse d'un hydrocarbure gazeux ou coke résultant de celle d'une résine organique ou d'un brai) ou de carbure (carbure de silicium résultant de la pyrolyse d'un organo-silicié, comme le méthyltrichlorosilane, ou d'une résine organo-siliciée). Suivant l'application envisagée, la préforme fibreuse peut correspondre à tout le volume du moule (renforcement intégral) ou ne correspondre qu'à une partie seulement de ce dernier (renfort local ou insert céramique-céramique, par exemple). Pour qu'elle puisse être aisément imprégnée par l'aluminium liquide, la préforme fibreuse doit présenter une porosité ouverte relativement importante. Dans le cas d'un insert céramique-céramique, notamment d'un insert céramique-céramique fibreux, l'insert devra, de même, avoir une porosité ouverte notable au niveau des faces en contact avec la matrice pour assurer un bon ancrage par pénétration du métal dans ladite porosité.

La préforme ainsi réalisée est ensuite pré-traitée 2 à l'aide d'espèces fluorées 3 avant d'être introduite 4 dans un moule préparé 6. Cette opération qui constitue sur le plan de la mise en œuvre technique, l'étape essentielle du procédé suivant l'invention peut être réalisée de diverses manières suivant que le pré-traitement de la préforme fibreuse à l'aide des espèces fluorées est effectué à l'état solide ou à partir d'une solution (ou d'une suspension). C'est ainsi que les espèces fluorées peuvent être utilisées sous la forme d'une poudre de très fine granulométrie qui est dispersée de manière uniforme à la surface de la préforme fibreuse. Dans ce cas la préforme doit être préchauffée, à une température qui dépend de la composition chimique du produit fluoré et de la nature des fibres (le carbone s'oxyde dès 400-500 °C alors que SiC peut être chauffé à l'air à très haute température), de manière à ce que celui-ci forme une croûte uniforme autour de la préforme.

Les espèces fluorées peuvent également être mises en solution (ou en suspension, suivant l'importance de leur solubilité dans les solvants habituels) dans un liquide approprié qui doit impérativement bien mouiller les fibres à pré-traiter. Un liant organique fugitif peut être ajouté au solvant dans le but de fixer temporairement les espèces fluorées au contact des fibres. Dans ces conditions, la préforme est pré-imprégnée, à une température qui dépend de la solubilité des espèces fluorées considérées et de la quantité de produit actif nécessaire au pré-traitement, par ladite solution (ou suspension), l'excès de solvants étant éliminé par voie physique. Ce mode de mise en œuvre du pré-traitement a l'avantage sur le précédent de répartir, de manière plus uniforme, les espèces fluorées actives au sein même de la préforme et de limiter la quantité de réactifs à la valeur juste nécessaire pour obtenir ultérieurement un bon mouillage par l'alliage métallique liquide. Le pré-traitement de la préforme fibreuse par les réactifs fluorés peut être réalisé en atmosphère inerte ou, plus simplement, à l'air.

Après pré-traitement, la préforme fibreuse placée dans un moule 4 du type de ceux qui sont utilisés en fonderie d'alliages légers (coquille métallique éventuellement recouverte, sur sa surface interne, d'un poteyage de protection), est imprégnée 7 par le métal liquide 8. La nature du métal 9 dépend de l'utilisation qui sera faite des produits élaborés (traitements thermiques de durcissement structural, par exemple). Les alliages légers de fonderie, présentant une bonne fusibilité, comme les alliages AS7G à base d'aluminium et de silicium, par exemple, sont d'un emploi particulièrement aisé.

En se référant maintenant à la figure 2, la réalisation de la préforme peut être effectuée, à l'aide de demi-produits fibreux (tissus, mats, par exemple), directement dans le moule. Dans ce cas, les demi-produits fibreux sont d'abord pré-traités 2' par le réactif fluoré 3 à l'extérieur du moule, par exemple, par immersion dans une solution (ou suspension) du réactif fluoré puis essorés. Ils sont ensuite drapés 4' contre les parois du moule 6 (dans sa totalité ou dans les seules parties de la pièce devant être renforcées) puis couche sur couche et une nouvelle addition de réactif fluoré est éventuellement faite pour être assuré que tout le renfort fibreux a bien été recouvert du réactif fluoré. Le moule est alors fermé et préchaufé 5, ce préchauffage éliminant l'excès de solvant (et éventuellement de liant fugitif). ·

En se référant aux deux figures 1 et 2, l'opération de coulée (9, 8, 7) est utilisée selon les règles de l'art. Elle peut être avantageusement effectuée 7 dans un moule placé préalablement en dépression, le métal étant ensuite introduit sous une légère surpression pour favoriser sa progression au sein de la préforme fibreuse. De la même manière, l'imprégnation est favorisée si moule et préforme ont été préchauffés 5. La température de préchauffage dépend de la nature de la pièce à élaborer et de celle des fibres. Si la coulée est effectuée à l'air, la température de préchauffage sera limitée à 350-400 °C dans le cas d'une préforme à base de fibres de carbone (le carbone s'oxydant à l'air à température plus élevée). La coulée est réalisée en atmosphère inerte si la nature de la pièce exige un préchauffage plus important. Il n'y a, en revanche, pas de limitation de température dans le cas de préformes à base de fibres de carbure de silicium.

Le procédé tel qu'il vient d'être décrit peut être étendu à l'élaboration, en continu, de demi-produits composites 10 comportant un renfort fibreux à base de carbone ou de carbures (carbure de silicium, par exemple) et à matrice d'alliage léger, sous la forme de fils, de rubans ou de profilés. En se référant maintenant aux figures 3 et 4, le premier composant constitué du renfort fibreux soigneusement nettoyé, sous la forme 1" d'une ou de plusieurs mèches, d'un ruban (tissé ou non) ou d'une bande de tissu de fibres à base de carbone ou de carbure (par exemple, de carbure de silicium) est emmagasiné sur une bobine débitrice 1'''. Il est débité, sous faible tension mécanique, vers un bac de pré-traitement contenant une solution 2'' (ou suspension) d'un agent fluoré 3 dans un solvant approprié (l'eau, par exemple, additionnée éventuellement d'une petite quantité d'un liant fugitif). A titre d'illustration, le pré-traitement peut être avantageusement effectué à l'aide d'une solution aqueuse saturée (ou presque saturée) à base de $K_2ZrF_6$ comme espèce active. Ce pré-traitement peut être réalisé en atmosphère inerte ou plus simplement à l'air.

Après imprégnation par la solution (ou suspension) d'agent fluoré, ce renfort fibreux défile dans un four de séchage 5' où l'excès de liquide est éliminé. Durant cette opération, l'agent fluoré se dépose, sous la forme d'une fine couche de particules solides, sur la paroi interne des pores et des interstices du renfort fibreux. Le composant 1'', ainsi pré-traité, est alors dirigé en continu vers un bac contenant le composant 9 sous la forme d'un alliage d'aluminium liquide maintenu à une température d'environ 750 ºC, qu'il traverse et où est réalisée l'imprégnation finale 7'.

Le composite ainsi réalisé est immédiatement dirigé vers un dispositif de calendrage 11 (rouleaux ou filière), en vue d'éliminer l'excès de métal qui aurait pu être entraîné et de lui donner sa section définitive (11, 12, fig. 3). Après cette opération, le produit est soit enroulé sur une bobine réceptrice de grand diamètre 12 (cas des fils de faible diamètre et des rubans ou des feuilles de faible épaisseur), soit débité (cas des demi-produits de plus forte épaisseur). Lorsque le renfort fibreux a été correctement nettoyé puis convenablement pré-traité par la solution (ou suspension) d'agent fluoré et, enfin, séché, l'alliage liquide, durant l'étape d'imprégnation, monte très rapidement par capillarité dans les pores et interstices. La vitesse de défilement du renfort fibreux doit être réglée de manière à ce que les trois opérations principales (pré-traitement par l'agent fluoré, séchage et imprégnation par l'alliage) soient complètes.

Les demi-produits ainsi obtenus peuvent servir à l'élaboration ultérieure de profilés de sections diverses, de panneaux, par les procédés métallurgiques reposant sur la déformation plastique à chaud connus de l'homme de l'art. L'invention sera maintenant illustrée à l'aide de quelques exemples sans que ces derniers puissent toutefois être considérés comme une limitation de sa portée ainsi que cela apparaîtra clairement à l'homme de l'art :

Exemple 1

Une préforme fibreuse se présentant sous la forme d'un parallélépipède à base carrée de 10 × 10 × 50 mm de côtés, a été réalisée à partir d'un feutre de fibres de carbone (diamètre environ 7 µm, précurseur de polyacrylonitrile) dans lequel la fraction volumique de fibres était de l'ordre de 20 %. Chaque face de la préforme a reçu une fine couche d'une poudre constituée de fluotitanate de potassium $K_2TiF_6$, puis la préforme a été chauffée à une température d'environ 700 ºC. Dans ces conditions, le produit fluoré forme, sans avoir pour autant été à la fusion (dans le cas contraire, $K_2TiF_6$ se serait partiellement décomposé), une couche uniforme assez résistante autour de la préforme. Après refroidissement, la préforme a été placée dans un moule constitué d'une coquille en acier (dimensions intérieures : diamètre = 16 mm ; hauteur = 60 mm). Le moule et la préforme fibreuse ont été préchauffés à 400-500 ºC, puis la coulée effectuée à l'aide d'un alliage AS7G. Au moment où le métal liquide est entré en contact avec la croûte de produit fluoré entourant la préforme, on a noté une réaction exothermique probablement liée à la réduction de $K_2TiF_6$ par l'aluminium et à diverses autres réactions secondaires.

Après refroidissement, la pièce a été tronçonnée perpendiculairement à son axe et examinée au microscope métallographique et au microscope électronique à balayage. Il est apparu que, dans les conditions de l'essai, le métal liquide, à la suite du pré-traitement par le produit fluoré et de la réaction exothermique avec l'aluminium, avait mouillé spontanément les fibres de la préforme et pénétré dans les pores ouverts de cette dernière. L'étude de la répartition des divers éléments, au voisinage des interfaces fibre-matrice (éléments contenus dans le produit fluoré, notamment), par micro-analyse X et micro-sonde par spectrométrie d'électrons connue sous le nom de spectrométrie AUGER, n'a pas permis de déceler d'accumulation notable de potassium, de titane ou de fluor, qui aurait pu être préjudiciable. Il est donc vraisemblable qu'une partie au moins des espèces fluorées initiales, ou formées lors de la réaction avec l'aluminium, a été vaporisée au moment de l'imprégnation par le métal liquide. On a noté, cependant, la présence de traces de potassium et de titane au voisinage immédiat des interfaces fibre-matrice, ainsi qu'une certaine porosité résiduelle (pores incomplètement remplis).

A titre de comparaison, le même essai réalisé sur la préforme non traitée à l'aide de l'agent fluoré, s'est soldé par un échec (pas de pénétration du métal liquide dans la préforme fibreuse).

Exemple 2

L'opération décrite dans l'exemple 1 a été répétée, mais le pré-traitement de la préforme fibreuse a été réalisé à l'aide d'un mélange fluoré contenant 50 % de $K_2TiF_6$ et 50 % de $KBF_4$ (en poids), à une température (500 ºC environ) sensiblement inférieure à celle requise par le pré-traitement par $K_2TiF_6$ seul.

Il a, de nouveau, été observé, qu'au moment où le métal liquide arrivait au contact avec la croûte de produits fluorés, une réaction exothermique se produisait et que le métal liquide mouillait les fibres et pénétrait dans les pores ouverts de la préforme fibreuse. Une certaine porosité résiduelle a, de nouveau, été constatée.

Ainsi, l'addition d'un fluoborate, au fluotitanate, bien qu'elle ne soit pas indispensable, comme l'a montrée l'exemple 1, permet d'abaisser de manière significative la température du pré-traitement des fibres et de minimiser un éventuel endommagement de ces dernières.

Exemple 3

Une préforme fibreuse se présentant sous la forme d'un cylindre de 35 mm de diamètre et de 50 mm de hauteur, a été réalisée à l'aide d'une construction 4D de baguettes de fibres de carbone commercialisée par la Société Européenne de Propulsion. Dans cette construction, les baguettes de fibres de carbone avaient un diamètre de 1 mm et étaient orientées suivant les quatres diagonales principales du cube, la porosité ouverte de la préforme était de 60 % environ.

Une solution aqueuse saturée de K2ZrF6 a été préparée en dissolvant à 80-100 °C un excès de ce sel dans l'eau. La préforme fibreuse a été plongée, à l'air dans cette solution qui mouille bien les baguettes de fibres de carbone. Après séchage à l'étuve, il a été observé qu'une couche fine et uniforme de produit fluoré recouvrait les baguettes aussi bien du côté de la surface externe de la préforme qu'au niveau des pores. La préforme ainsi pré-traitée a été imprégnée, en coquille, à l'aide d'une alliage AS7G liquide, comme décrit dans l'exemple 1.

Comme précédemment, on a observé une réaction exothermique, mais d'intensité plus faible compte-tenu de la quantité plus réduite de produit fluoré concernée, au moment où le métal liquide entrait en contact avec le produit fluoré, accompagnée d'une pénétration complète du liquide dans tous les interstices de la préforme 4D. Aucune accumulation notable de produits fluorés ne subsistait dans la préforme après imprégnation. De même, aucune altération des baguettes n'a été notée. On a pu ainsi, réaliser, directement à l'air, un composite 4D carbone-aluminium, sous forme massive, contenant environ 40 % en volume de fibres (sous la forme de baguettes de 1 mm de diamètre).

Cet exemple démontre que le procédé aux agents fluorés suivant l'invention, permet d'obtenir, de manière extrêmement simple, des pièces relativement massives de composites fibres de carbone-aluminium caractérisé par des fractions volumiques élevées de fibres de carbone. Il souligne, par ailleurs, l'avantage que présente la mise en œuvre, par voie liquide, de l'imprégnation de la préforme par l'agent fluoré. A ce titre, l'utilisation de K2ZrF6 est particulièrement indiquée, compte-tenu de la solubilité élevée de ce fluorure double dans l'eau. Le principal avantage de ce mode de pré-traitement réside dans le fait que l'imprégnation de la préforme à l'aide d'une solution, permet de disperser de manière très uniforme l'agent fluoré dans toute la porosité ouverte de la préforme en évitant d'avoir à en utiliser un excès. Enfin, il apparaîtra à l'homme de l'art que la nature des réactifs, et surtout le mode opératoire préconisé, démarquent très nettement le procédé selon l'invention de ceux qui avaient été développés antérieurement pour l'affinage des alliages d'aluminium à l'aide de flux fluorés ou pour le pré-traitement des mèches de carbone en vue de leur imprégnation par les alliages d'aluminium.

Exemple 4

Une préforme fibreuse analogue, en dimensions, à celle considérée à l'exemple 1, a été réalisée à partir d'un feutre de fibres de carbone qui avait reçu, au préalable, un traitement CVD de manière à ce que chaque fibre de carbone ait un revêtement de 1 μm environ de carbure de silicium. Puis la préforme a été pré-traitée, à l'état solide, par un mélange 50K2TiF6-50KBF4 (en poids) et imprégnée par un alliage AS7G liquide, comme indiqué à l'exemple 2. L'analyse a montré que la préforme avait été imprégnée sans porosité résiduelle excessive et sans accumulation notable d'agent fluoré.

Un essai comparatif réalisé sur la même préforme, mais sans pré-traitement par le mélange fluoré s'est traduit par un échec (peu ou pas de pénétration du métal dans la préforme fibreuse).

Cet exemple illustre le fait que le procédé suivant l'invention est susceptible de s'appliquer à des fibres autres que les fibres de carbone.

Exemple 5

Une préforme fibreuse se présentant sous la forme d'un parallélépipède (26 × 50 × 50 mm) a été utilisée à partir de tissus de fibres à base de carbure de silicium (fibres de type NICALON de 10 à 12 μm de diamètre, commercialisées par la Société NIPPON CARBON). La fraction volumique de fibres y était de 20 % environ.

Une solution aqueuse de K2ZrF6 a été préparée en dissolvant ce sel dans l'eau (à raison de 20 grammes de K2ZrF6 pour 100 ml de solvant) à température suffisante pour qu'il n'y ait pas de résidu solide. La préforme fibreuse a été plongée, à l'air, dans cette solution qui mouille bien ce type de fibres et monte par capillarité dans tous les interstices de la préforme. Après étuvage à 110-120 °C, il a été observé qu'une couche fine et uniforme de produit fluoré recouvrait les fibres. La préforme ainsi pré-traitée a été placée dans une coquille en acier (comportant un poteyage protecteur) du type de celles communément utilisées en fonderie d'alliages légers. Coquille et préforme ont été préchauffées à 550 °C environ, puis la coulée a été effectuée à l'air et à 750 °C environ, avec un alliage AS7G06.

Après analyse, il est apparu que, dans les conditions de l'essai, l'alliage d'aluminium avait parfaitement mouillé les fibres et pénétré, par montée capillaire, dans tous les interstices de la préforme, conduisant à un composite à 20 % environ de fibres et à 80 % environ de matrice, en volume.

Le même essai a alors été réalisé sans que la préforme fibreuse ait reçu le pré-traitement au fluozirconate de potassium. L'essai s'est traduit par un échec, l'alliage n'ayant pratiquement pas pénétré au sein de la préforme fibreuse.

Ces deux essais montrent donc qu'un pré-traitement, par un procédé tel que celui selon l'invention, est indispensable pour élaborer, par les techniques habituelles de la fonderie et à partir d'une préforme fibreuse poreuse, un composite, de forme massive, constitué d'un renfort fibreux à base de carbure de silicium et d'un alliage d'aluminium, au moins lorsque les fibres sont de très petit diamètre et lorsque leur fraction volumique dans le matériau est relativement élevée. Ainsi le procédé selon l'invention se distingue-t-il de celui décrit par S. YAJIMA qui fait appel à une imprégnation en phase liquide, sous pression élevée (presse à plateaux chauffants), à l'intérieur d'un sac scellé sous vide, du renfort fibreux non pré-traité de type NICALON par l'aluminium.

Exemple 6

L'essai décrit dans l'exemple 5 a été répété à partir d'une préforme multi-directionnelle réalisée à l'aide de fibres à base de carbure de silicium (fibres NICALON) dans laquelle la fraction volumique de fibres était de l'ordre de 32 %. Après pré-traitement à l'agent $K_2ZrF_6$ en solution aqueuse, séchage, préchauffage de la préforme dans la coquille, coulée à l'air (alliage AS7G06 à 750 °C) et refroidissement, il est apparu que ladite préforme avait été convenablement imprégnée.

Toutefois, pour obtenir une bonne imprégnation de cette préforme, moins poreuse que celle évoquée dans l'exemple 5, le préchauffage avant coulée a dû être réalisé à température plus élevée (de l'ordre de 650 °C) pour que l'alliage ne se solidifie pas trop rapidement au contact de la coquille et de la préforme et ait le temps de pénétrer dans tous les pores. En raison de l'excellente résistance à l'oxydation du carbure de silicium, cette opération ne s'est traduite par aucune dégradation notable des propriétés de renforcement des fibres alors que la même opération aurait dû être conduite en atmosphère neutre dans le cas d'une préforme du même type, mais constituée de fibres de carbone.

Exemple 7

Contrairement aux exemples précédents où la préforme fibreuse était réalisée à l'extérieur du moule, pré-traitée par l'agent fluoré puis introduite dans le moule avant la coulée, dans cet exemple, le renfort fibreux, sous la forme de tissus de fibres à base de carbure de silicium (fibres NICALON) pré-traités à l'agent $K_2ZrF_6$ en solution aqueuse puis essorés, a été drapé, encore humide, sur les parois du moule, puis couche sur couche, de manière à remplir pratiquement tout le volume de ce dernier. Après fermeture de la coquille, moule et renfort fibreux ont été portés à 120 °C pour éliminer l'excès d'eau puis à 450 °C environ. L'imprégnation par l'alliage AS7G06 a été effectuée, à l'air, dans des conditions satisfaisantes.

Exemple 8

Le mode opératoire décrit à l'exemple 5 a été répété, la préforme étant constituée d'un renfort local (40 × 20 × 10 mm) de composite de type céramique-céramique à base de fibres et de matrice de carbure de silicium (du type de ceux fabriqués par la Société Européenne de Propulsion sous la marque CERASEP). Pour permettre un bon accrochage au moment de la coulée — de l'insert dans le métal, le renfort composite présentait une porosité résiduelle importante sur sa face interne (et au contraire, une porosité résiduelle pratiquement nulle sur sa face externe). L'insert composite, pré-traité à l'agent $K_2ZrF_6$, comme indiqué à l'exemple 5, de manière à ce que les pores qu'il présentait sur sa face interne aient reçu une fine couche de produit fluoré, a été placé au fond du moule et la coulée effectuée à l'aide de l'alliage AS7G06 à 750 °C, après préchauffage à 500-600 °C environ, et mise sous vide partiel.

Après analyse, il est apparu que l'alliage avait parfaitement pénétré dans les pores de l'insert, sur une profondeur de 2 à 3 mm environ, assurant ainsi un bon ancrage de l'insert composite dans la pièce métallique.

Exemple 9

Une mèche de carbone comportant environ 12 000 brins élémentaires, disensimée à l'aide des solvants organiques puis séchée, a été traitée en continu, suivant la méthode indiquée plus haut (fig. 3 et 4) à l'aide d'une solution aqueuse de $K_2ZrF_6$ pratiquement saturée et maintenue vers 90 °C, séchée dans un four électrique tubulaire à une température de l'ordre de 300 °C puis imprégnée à l'aide d'un alliage d'aluminium de type AS7G porté à une température de 750 à 800 °C. Tout le traitement a été effectué à l'air, la vitesse de défilement de la mèche étant de l'ordre d'un mètre à la minute. Immédiatement à la sortie du bain d'alliage métallique, le produit a été calendré. Il se présentait alors sous la forme d'un mince ruban (3 × 0,5 mm de section environ) comportant une fraction volumique de fibres voisine de 40 %. L'observation micrographique d'une section polie du ruban a montré que l'imprégnation du renfort fibreux par le métal avait été homogène et qu'il n'y avait pas de porosités résiduelles en quantité notable ni de rétention d'agent fluoré en quantité significative.

Un essai similaire, réalisé sur le même type de mèche de carbone, mais dans lequel le pré-traitement par la solution $K_2ZrF_6$ avait été supprimé, s'est traduit par un échec, le métal liquide n'ayant pas pénétré de manière significative au sein de la mèche.

Exemple 10

L'exemple 9 a été repris, en remplaçant la mèche de fibres de carbone par une mèche de fibres de carbure de silicium (fibres de type NICALON comportant environ 200 brins élémentaires de 10-12 μm de diamètre). On a constaté que le procédé de pré-traitement au fluozirconate était également efficace dans le cas des fibres à base de carbure de silicium et on a obtenu, après calendrage, un fil composite de faible diamètre dans lequel la fraction volumique de fibres était d'environ 30 %. Des fils (ou rubans) composites de plus forte section ont pu être préparés en utilisant simultanément plusieurs bobines débitrices et un dispositif unique de calendrage.

Comme dans l'exemple précédent, il a été constaté, qu'en supprimant le pré-traitement au fluozirconate de potassium, il n'y avait pas de pénétration notable du métal liquide au sein de la mèche.

Exemple 11

L'exemple 9 a été repris, en remplaçant la mèche de fibres de carbone par un tissu de fibres à base de carbure de silicium (fibres NICALON) sous la forme d'une bande tissée d'environ 60 mm de largeur. Ladite bande, après nettoyage et séchage (par exemple, à l'aide de solvants organiques) a subi un pré-traitement analogue à celui décrit dans l'exemple 9 ou 10, la vitesse de défilement ayant toutefois été abaissée au voisinage de 50 cm à la minute. Immédiatement à la sortie du bain d'alliage AS7G, la bande composite a été uniformisée en épaisseur par passage entre deux rouleaux. Le produit se présentait alors sous la forme d'un mince feuillard de 60 mm de largeur et de 0,3 mm d'épaisseur environ, avec une fraction volumique de fibres voisine de 30 %.

Ces feuillards ont été découpés en longueurs de 60 mm, empilés entre les plateaux d'une presse chauffante et comprimés sous vide à une température proche de la fusion de l'alliage. Après refroidissement, on a obtenu une plaque composite de 60 × 60 × 5 mm.

Cet exemple montre que des demi-produits composites fibreux, carbure de silicium-aluminium, peuvent être élaborés, en continu, conformément au procédé selon l'invention puis éventuellement transformés en pièces plus massives suivant les techniques métallurgiques de mise en forme, connues de l'homme de l'art.

Des résultats similaires ont été obtenus en remplaçant les tissus à base de carbure de silicium par des tissus de carbone, la vitesse de défilement ayant dû encore être abaissée (jusque vers 10 cm à la minute), pour tenir compte du plus grand nombre de brins présents dans les mèches de carbone constituant les tissus.

**Revendications**

1. Procédé d'élaboration de matériaux composites (10) comprenant un premier composant de renforcement à base de carbone ou d'un carbure, ou revêtu en surface de carbone ou d'un carbure, et un deuxième composant (9) jouant le rôle de matrice constitué par un alliage léger, caractérisé en ce que, dans une première étape, on traite le premier composant de renforcement par un agent fluoré (3) contenant au moins un fluorure double d'un élément de transition ou d'un élément métalloïdique, et d'un élément électropositif et, dans une seconde étape, on imprègne le premier composant de renforcement ainsi prétraité à l'aide du deuxième composant (9) mis à l'état liquide.

2. Procédé d'élaboration de matériaux composites (10) comprenant un premier composant fibreux de renforcement (1) appartenant au groupe formé par les fibres à base de carbone, les fibres à base de carbures, y compris le carbure de silicium, les fibres à base de tout matériau réfractaire revêtu de carbone ou carbures, et un deuxième composant (9) constitué par un alliage léger, caractérisé en ce que, dans une première étape, on traite le premier composant fibreux de renforcement (1) par un agent fluoré (3) contenant au moins un fluorure double d'un élément de transition ou d'un élément métalloïdique, et d'un élément électropositif, et dans une seconde étape, on imprègne le premier composant fibreux de renforcement (1) ainsi pré-traité, à l'aide du deuxième composant (9) mis à l'état liquide.

3. Procédé selon l'une quelconque des revendications 1 ou 2, caractérisé en ce que l'élément de transition est choisi parmi le titane, le zirconium, le hafnium, le vanadium, le niobium ou le tantale.

4. Procédé selon l'une quelconque des revendications 1 à 3, caractérisé en ce que l'élément métalloïdique est choisi parmi le bore, le silicium ou l'aluminium.

5. Procédé selon l'une quelconque des revendications 1 à 4, caractérisé en ce que l'élément électropositif est choisi parmi les alcalins, l'ammonium, les alcalino-terreux ou les terres rares.

6. Procédé selon la revendication 2, caractérisé en ce que l'agent fluoré (3) est le fluotitanate de potassium K2TiF6.

7. Procédé selon la revendication 2, caractérisé en ce que l'agent fluoré (3) est le fluozirconate de potassium K2ZrF6.

8. Procédé selon la revendication 2, caractérisé en ce que l'agent fluoré (3) est un mélange de fluotitanate de potassium K2TiF6 et de fluoborate de potassium KBF4.

9. Procédé selon la revendication 2, caractérisé en ce que l'agent fluoré (3) est un mélange de fluozirconate de potassium K2ZrF6 et de fluoborate de potassium KBF4.

10. Procédé selon les revendications 8 et 9, caractérisé en ce que les deux espèces fluorées (3) du mélange sont prises sensiblement à parts égales.

11. Procédé selon l'une quelconque des revendications 1 à 10, caractérisé en ce qu'auxdites espèces fluorées (3) sont ajoutés un ou plusieurs halogénures alcalins, alcalino-terreux ou des terres rares.

12. Procédé selon l'une quelconque des revendications 2 à 11, caractérisé en ce que l'agent fluoré (3) est utilisé à l'état solide, sous la forme d'une poudre de fine granulométrie, dispersée à la surface du composant fibreux de renforcement (1), la température dudit composant fibreux de renforcement étant portée à une valeur suffisante pour former une croûte uniforme et adhérente autour dudit composant fibreux de renforcement.

13. Procédé selon l'une quelconque des revendications 2 à 11, caractérisé en ce que l'agent fluoré (3) est introduit dans les pores et interstices du composant fibreux de renforcement (1) mis en œuvre, sous forme unitaire, de demi-produits ou de préformes fibreuses, par l'intermédiaire d'une solution dans un solvant ou lorsqu'il est peu soluble d'une suspension, susceptible de mouiller les fibres dudit renfort et contenant éventuellement un liant fugitif, le solvant puis le liant étant ultérieurement éliminés par voie physique.

14. Procédé selon la revendication 13, caractérisé en ce que ladite solution est une solution aqueuse saturée ou voisine de la saturation en fluozirconate de potassium K2ZrF6, prise à une température assurant la mise en solution d'une quantité suffisante de fluozirconate.

15. Procédé selon l'une quelconque des revendications 2 à 14, caractérisé en ce que ledit pré-traitement (2) du renfort fibreux par l'agent fluoré (3) est réalisé dans l'une quelconque des situations suivantes, en atmosphère inerte, sous pression réduite, à l'air libre.

16. Procédé selon l'une quelconque des revendications 2 à 15, caractérisé en ce que ledit premier constituant de renforcement (1) est mis en œuvre sous l'une quelconque des formes suivantes : fibres courtes en vrac, feutre, mats, mèches, tissus, préformes réalisées à partir de feutres, de mats, de mèches, de tissus ou d'architectures multi-directionnelles de fibres ou de baguettes fibreuses à hautes performances de carbures tels que le carbure de silicium ou de tout matériau réfractaire revêtu de carbone ou de carbures.

17. Procédé selon l'une quelconque des revendications 2 à 16, caractérisé en ce qu'il consiste à mettre en œuvre ledit premier constituant de renforcement sous la forme d'une préforme fibreuse (1), à pré-traiter (2) ladite préforme fibreuse par l'agent fluoré (3), à placer ladite préforme fibreuse pré-traitée à l'intérieur d'un moule du type de ceux utilisés en fonderie d'alliages légers, à préchauffer (5) l'ensemble à une température suffisante selon la porosité de la préforme et comprise entre 350 °C et la température de fusion de l'alliage, puis à imprégner (7) ladite préforme au sein dudit moule à l'aide d'un alliage léger (9) suivant les techniques de la fonderie.

18. Procédé selon l'une quelconque des revendications 2 à 16, caractérisé en ce qu'il consiste à mettre en œuvre ledit premier constituant de renforcement sous la forme d'une préforme fibreuse (1), ladite préforme fibreuse étant réalisée au sein d'un moule (6), par drapage (4') contre les parois internes du moule, puis couche sur couche jusqu'à remplir pratiquement tout le volume de ce dernier, de demi-produits fibreux, comme des mats ou des tissus, préalablement pré-traités (2') par une solution ou une suspension d'agent fluoré (3) puis essorés, le moule étant alors fermé et préchauffé (5) à température suffisante selon la porosité résiduelle de la préforme et comprise entre 350 °C et la température de fusion de l'alliage, puis ladite préforme ainsi réalisée est imprégnée (7) au sein dudit moule à l'aide d'un alliage léger (9) suivant les techniques de la fonderie.

19. Procédé selon l'une quelconque des revendications 16 à 18, caractérisé en ce que la préforme fibreuse occupe au moins une partie du volume du moule.

20. Procédé selon les revendications 17 et 19, selon lequel la préforme fibreuse occupe une partie du volume du moule et y constitue un renfort local, caractérisé en ce que ce renfort local est un insert du type céramique-céramique de nature fibreuse en carbure de silicium densifié en partie par du carbure de silicium et ayant au moins dans la région de ses faces devant être mises en contact avec l'alliage liquide une porosité résiduelle ouverte.

21. Procédé selon l'une quelconque des revendications 1 à 16, caractérisé en ce que le premier constituant·de renforcement est mis en œuvre en continu sous forme de produits allongés fibreux à base de carbone ou de carbures ou de carbure de silicium ou, de tout matériau réfractaire revêtu de carbone ou de carbures qui sont déplacés en défilement sous une légère tension mécanique, dans une première étape, dans un bain de solution ou de suspension de pré-traitement (2") contenant au moins ledit agent fluoré (3), puis déplacés en continu dans un four (5'), et, dans une deuxième étape, le renfort fibreux ainsi pré-traité et séché, est imprégné (7') par le second constituant (9), par défilement en continu dans un bac contenant l'alliage léger maintenu à l'état liquide, le produit composite (10) étant ensuite mis à une section donnée par passage dans un moyen de conformation (11) approprié immédiatement à la sortie dudit bac.

22. Procédé selon la revendication 21, caractérisé en ce qu'on ajuste la vitesse de défilement du premier constituant fibreux à une valeur telle que l'opération de pré-traitement (2") laisse dans les interstices et à la surface de ce premier constituant une quantité juste suffisante d'agent fluoré favorisant le mouillage sans pour autant conduire à la présence d'inclusions, et telle que la pénétration par capillarité du métal liquide dans les pores et interstices dudit premier composant pré-traité soit substantiellement complète.

23. Procédé selon la revendication 22, caractérisé en ce que la vitesse de défilement est comprise entre 0,10 mètre à la minute et 1 mètre à la minute.

24. Procédé selon l'une quelconque des revendications précédentes, caractérisé en ce que ledit alliage léger (9) est un alliage à base d'aluminium.

25. Pièces composites (10) réalisées par le procédé selon l'une quelconque des revendications 17 à 20 ou élaborées par déformation plastique à chaud en phase semi-liquide ou liquide à partir des demi-produits fibreux obtenus selon les revendications 21 à 23.

## Claims

1. A method of making composite materials (10) comprising a first reinforcing component based on carbon or on a carbide or surface coated with carbon or with a carbide, and a second component acting as a matrix and constituted by a light alloy, characterized in that in a first step the first reinforcing component is treated with a fluorided agent (3) containing at least one double fluoride of a transition element or a non-metallic element and of an electro-positive element, and in a second step the first fibrous reinforcing component pre-treated in this way is impregnated with the second component (9) put into its liquid state.

2. A method of making composite materials (10) comprising a first fibrous reinforcing component (1) belonging to the group constituted by carbon-based fibers, carbide (including silicon carbide) -based fibers, fibers based on any refractory material coated with carbon or with carbides, and a second component (9) constituted by a light alloy, characterized in that in a first step the first reinforcing component is treated with a fluorided agent (3) containing at least one double fluoride of a transition element or a non-metallic element and of an electro-positive element, and in a second step the first fibrous reinforcing component (1) pre-treated in this way is impregnated with the second component (9) put into its liquid state.

3. A method according to any one of claims 1 or 2, characterized in that the transition element is selected from titanium, zirconium, hafnium, vanadium, niobium, or tantalum.

4. A method according to any one of claims 1 to 3, characterized in that the non-metallic element is selected from boron, silicon, or aluminium.

5. A method according to any one of claims 1 to 4, characterized in that the electro-positive element is chosen for the alkalis, ammonium, alkaline-earths, or rare earths.

6. A method according to claim 2, characterized in that the fluorided agent is potassium fluotitanate $K_2TiF_6$.

7. A method according to claim 2, characterized in that the fluorided agent (3) is potassium fluozirconate $K_2ZrF_6$.

8. A method according to claim 2, characterized in that the fluorided agent (3) is a mixture of potassium fluotitanate $K_2TiF_6$ and potassium fluoborate $KBF_4$.

9. A method according to claim 2, characterized in that the fluorided agent (3) is a mixture of potassium fluozirconate $K_2ZrF_6$ and potassium fluoborate $KBF_4$.

10. A method according to claim 8 or 9, characterized in that the two fluorided compounds (3) in the mixture are taken in substantially equal parts.

11. A method according to any one of claims 1 to 10, characterized in that one or more alkali, alkaline-earth or rare earth halides are added to said fluorided compounds.

12. A method according to any one of claims 2 to 11, characterized in that the fluorided agent is used in the solid state in the form of a powder having fine granulometry, which powder is dispersed over the surface of the fibrous reinforcing component (1), with the temperature of said fibrous reinforcing component being raised to a sufficiently high value to form a uniform adhesive crust around said fibrous reinforcing component.

13. A method according to any one of claims 2 to 11, characterized in that the fluorided agent (3) is inserted into the pores and interstices of the fibrous reinforcing component (1) implemented as one-piece semi-manufactured products or fibrous preforms by means of a solution in a solvent (or when not very soluble in the form of a suspension) suitable for wetting the fibers of said reinforcement, and optionally containing a temporary binder, with the solvent and the binder being subsequently eliminated by physical means.

14. A method according to claim 13, characterized in that said solution is a saturated or nearly saturated aqueous solution of potassium fluozirconate $K_2ZrF_6$ used at a temperature which ensures that a sufficient quantity of fluozirconate is taken into solution.

15. A method according to any one of claims 2 to 14, characterized in that said pretreatment (2) of the fibrous reinforcement by means of the fluorided agent (3) is performed in any one of the following situations : in an inert atmosphere ; under reduced pressure ; in free air.

16. A method according to any one of claims 2 to 15, characterized in that said first reinforcing component (1) is implemented in any one of the following forms : short fibers in bulk ; felt ; mat ; wick ; cloth ; preforms made of felt, mat, wick, or cloth ; or multi-directional structures of fibers or high-performance fibrous rods made of carbides such as silicon carbide, or any refractory material covered with carbon or carbides.

17. A method according to any one of claims 2 to 16, characterized in that it consists in implementing said first reinforcing component in the form of a fibrous preform (1), in pre-treating (2) said fibrous perform with the fluorided agent (3), in placing said pre-treated fibrous preform inside a mold of the type used in light alloy casting, in pre-heating (5) the assembly to a suitably high temperature depending on the porosity of the preform and lying between 350 °C and the melting temperature of the alloy, and then impregnating (7) said preform within said mold using a light alloy (9) and using foundry techniques.

18. A method according to any one of claims 2 to 16, characterized in that it consists in implementing said first reinforcing component in the form of a fibrous preform (1), said fibrous preform being made inside a mold (6) by draping (4') fibrous semi-manufactured products such as mats or cloth over the inside walls of the mold and then layer-on-layer until practically the entire volume of the mold has been filled, said semi-manufactured products being previously pre-treated (2') with a solution or a suspension of fluorided agent (3) and then dried, the mold then being closed and pre-heated (5) to a sufficient temperature depending on the residual porosity of the preform and lying between 350 °C and the melting temperature of the alloy, and said preform made in this way then being impregnated (7) inside said mold by means of a light alloy (9) using foundry techniques.

19. A method according to any one of claims 16 to 18, characterized in that the fibrous preform occupies at least a portion of the volume of the mold.

20. A method according to claims 17 and 19, wherein the fibrous preform occupies a portion of the mold volume and constitutes a local reinforcement therein, characterized in that this local reinforcement is an insert of the ceramic-ceramic type, is fibrous in nature, is made of silicon carbide, is densified in part by silicon carbide, and has residual open porosity at least in the region of its faces for coming into contact with the liquid alloy.

21. A method according to any one of claims 1 to 16, characterized in that the first reinforcing component is continuously implemented in the form of elongate fibrous products based on carbon or on carbides or on silicon carbides, or on any refractory material coated with carbon or carbides, which products are displaced and move under low mechanical tension during a first stage through a pre-treatment bath (2'') of a solution or a suspension containing at least said fluorided agent (3), and then continuously displaced through an oven (5'), and in a second stage the fibrous reinforcement pretreated in this way and dried is impregnated (7') by the second component (9) by running continuously through a tank containing light alloy maintained in the liquid state, the composite product then having a given cross-section imparted to it by passing through suitable shaping means (11) immediately after leaving said tank.

22. A method according to claim 21, characterized in that the speed at which the first fibrous component runs is adjusted to a value such that the pre-treatment operation (2'') leaves a just sufficient quantity of fluorided agent in the interstices and on the surface of said first component to encourage wetting without leading to the presence of inclusions, so that the penetration of the liquid metal into the pores and interstices of said first pre-treated component by means of capillarity is substantially complete.

23. A method according to claim 22, characterized in that the running speed lies between 0.10 meters per minute and 1 meter per minute.

24. A method according to any preceding claim, characterized in that said light alloy (9) is an alloy based on aluminium.

25. Composite parts (10) made by the method according to any one of claims 17 to 20 or by hot plastic deformation in the semi-liquid or liquid phase of the fibrous semi-manufactured products obtained in accordance with claims 21 to 23.

**Patentansprüche**

1. Verfahren zum Herstellen von Verbundmaterialien (10), umfassend eine erste Bewehrungskomponente auf Basis von Kohlenstoff oder einem Karbid oder mit einer Oberflächenbeschichtung aus Kohlenstoff oder einem Karbid sowie eine zweite Komponente (9), die die Rolle der Matrix spielt und von einer Leichtlegierung gebildet ist, dadurch gekennzeichnet, daß man in einem ersten Schritt die erste Bewehrungskomponente mit einem fluorierten Mittel (3) behandelt, enthaltend mindestens ein Doppelfluorid eines Übergangselementes oder eines Metalloidelementes sowie eines elektropositiven Elementes und daß man in einem zweiten Schritt die erste Bewehrungskomponente, derart vorbehandelt, mit Hilfe der zweiten Komponente (9), die verflüssigt worden ist, imprägniert.

2. Verfahren zum Herstellen von Verbundmaterialien (10), umfassend eine erste faserige Bewehrungskomponente (1), zugehörig zu der Gruppe, gebildet von Fasern auf Basis von Kohlenstoff, Fasern auf Basis von Karbiden, einschließlich Siliciumcarbid, Fasern auf Basis von jeglichem feuerfesten Material, beschichtet mit Kohlenstoff oder Karbiden, und eine zweite Komponente (9), gebildet von einer Leichtlegierung, dadurch gekennzeichnet, daß man in einem ersten Schritt die erste faserige Bewehrungskomponente (1) mit einem fluorierten Mittel (3) behandelt, enthaltend mindestens ein Doppelfluorid eines Übergangselementes oder eines Metalloidelementes sowie eines elektropositiven Elementes und daß man in einem zweiten Schritt die erste faserige Bewehrungskomponente (1), so vorbehandelt, mit Hilfe der zweiten, in flüssigen Zustand gebrachte Komponente (9) imprägniert.

3. Verfahren nach einem der Ansprüche 1 oder 2, dadurch gekennzeichnet, daß das Übergangselement unter Titan, Zirkon, Hafnium, Vanadium, Niob oder Tantal gewählt wird.

4. Verfahren nach einem der Ansprüche 1 bis 3, dadurch gekennzeichnet, daß das Metalloidelement unter Bor, Silicium oder Aluminium gewählt wird.

5. Verfahren nach einem der Ansprüche 1 bis 4, dadurch gekennzeichnet, daß das elektropositive Element unter den Alkalien, Ammonium, Erdalkalien oder seltenen Erden gewählt wird.

6. Verfahren nach Anspruch 2, dadurch gekennzeichnet, daß das fluorierte Mittel (3) das Kaliumfluotitanat $K_2TiF_6$ ist.

7. Verfahren nach Anspruch 2, dadurch gekennzeichnet, daß das fluorierte Mittel (3) das Kaliumfluozirkonat K2ZrF6 ist.

8. Verfahren nach Anspruch 2, dadurch gekennzeichnet, daß das fluorierte Mittel (3) eine Mischung aus Kaliumfluotitanat K2TiF6 und Kaliumfluoborat KBF4 ist.

9. Verfahren nach Anspruch 2, dadurch gekennzeichnet, daß das fluorierte Mittel (3) eine Mischung aus Kaliumfluozirkonat K2ZrF6 und Kaliumfluoborat KBF4 ist.

10. Verfahren nach Anspruch 8 und 9, dadurch gekennzeichnet, daß beide fluorierten Bestandteile (3) der Mischung im wesentlichen zu gleichen Teilen eingesetzt werden.

11. Verfahren nach einem der Ansprüche von 1 bis 10, dadurch gekennzeichnet, daß den genannten fluorierten Bestandteilen (3) ein oder mehrere Alkali-, Erdalkali- oder seltene -Erden-Halogenide zugesetzt werden.

12. Verfahren nach einem der Ansprüche von 2 bis 11, dadurch gekennzeichnet, daß das fluorierte Mittel (3) im festen Zustand verwendet wird in Form eines Puders feiner Granulometrie, auf die Oberfläche der faserigen Bewehrungskomponente (1) dispergiert, wobei die Temperatur der genannten faserigen Bewehrungskomponente auf einen Wert gebracht wird, der hinreicht, um eine gleichförmige und an der genannten faserigen Bewehrungskomponente fest haftende Kruste zu bilden.

13. Verfahren nach einem der Ansprüche von 2 bis 11, dadurch gekennzeichnet, daß das fluorierte Mittel (3) in die Poren und Zwischenräume der faserigen Bewehrungskomponente, die als Einheitsform, als Halbzeug oder als faseriger Vorformling eingesetzt wird über eine Lösung in einem Lösungsmittel oder wenn es schlecht löslich ist, eine Suspension eingebracht wird, geeignet zum Befeuchten der Fasern der genannten Bewehrung und gegebenenfalls ein flüchtiges Bindemittel enthalten, wobei das Lösungsmittel und danach das Bindemittel schließlich auf physischem Wege eliminiert werden.

14. Verfahren nach Anspruch 13, dadurch gekennzeichnet, daß die genannte Lösung eine gesättigte oder nahezu gesättigte, wässrige Lösung von Kaliumfluozirkonat K2ZrF6 ist, auf eine Temperatur gebracht, bei der die Lösung einer hinreichenden Quantität des Fluozirkonats sichergestellt ist.

15. Verfahren nach einem der Ansprüche von 2 bis 14, dadurch gekennzeichnet, daß die genannte Vorbehandlung (2) der faserigen Bewehrung mittels des fluorierten Mittels (3) in irgendeiner der nachgenannten Situationen erfolgt, nämlich Inerteatmosphäre unter verringertem Druck in freier Luft.

16. Verfahren nach einem der Ansprüche von 2 bis 15, dadurch gekennzeichnet, daß der genannte erste Bewehrungsbestandteil (1) in einer der nachgenannten Formen eingesetzt wird : kurze Stapelfasern, Filz, Matten, Dochte, Gewebe, Vorformlinge realisiert ausgehend von Blättern, Matten, Dochten, Geweben oder multidirektionelle Faserarchitekturen oder Faserbündeln mit hochbelastbaren Karbiden, wie Siliciumcarbid oder alle feuerfesten Materialien, beschichtet mit Kohlenstoff oder Karbiden.

17. Verfahren nach einem der Ansprüche von 2 bis 16, dadurch gekennzeichnet, daß es derart ausgeführt wird, daß der genannte erste Bewehrungsbestandteil in Form eines faserigen Vorformlings (1) eingesetzt wird, daß dieser faserige Vorformling mit dem fluorierten Mittel (3) behandelt wird, daß der genannte faserige vorbehandelte Vorformling im Innern einer Form, wie sie in der Leichtlegierungsgießerei üblich sind, eingesetzt wird, daß die Baugruppe auf eine Temperatur vorgeheizt (5) wird, die entsprechend der Porosität des Vorformlings ausreichend ist und zwischen 350 °C und der Schmelztemperatur der Legierung liegt und daß danach der genannte Vorformling im Innern der genannten Form mit Hilfe einer Leichtlegierung (9) entsprechend den Gießtechniken imprägniert (7) wird.

18. Verfahren nach einem der Ansprüche 2 bis 16, dadurch gekennzeichnet, daß es derart ausgeführt wird, daß der genannte erste Bewehrungsbestandteil in Form eines faserigen Vorformlings (1) eingesetzt wird, der genannte faserige Vorformling im Innern einer Form (6) hergestellt wird, in dem faserige Halbzeuge, wie Matten oder Gewebe, die vorher (2') mit einer Lösung oder Suspension des fluorierten Mittels (3) vorbehandelt und danach luftgetrocknet wurden, gegen die Innenwandungen der Form drapiert (4') und danach Schicht um Schicht bis zur praktischen Füllung des gesamten Formvolumens eingebracht werden, wonach die Form geschlossen und vorgeheizt (5) auf eine Temperatur wird, die je nach der verbleibenden Porosität des Vorformlings hinreicht und zwischen 350 °C und dem Schmelzpunkt der Legierung liegt, wonach der so hergestellte Vorformling innerhalb der Form mit Hilfe einer Leichtlegierung (9) gemäß den Gießtechniken imprägniert (7) wird.

19. Verfahren nach einem der Ansprüche von 16 bis 18, dadurch gekennzeichnet, daß der faserige Vorformling mindestens einen Teil des Volumens der Form einnimmt.

20. Verfahren nach Anspruch 17 und 19, bei dem der faserige Vorformling einen Teil des Volumens der Form einnimmt und dort eine örtliche Bewehrung bildet, dadurch gekennzeichnet, daß diese örtliche Bewehrung ein Einsatz des Typs keramisch-keramisch faseriger Natur aus Siliciumcarbid, teilweise durch Siliciumcarbid verdichtet, ist und mindestens in dem Bereich seiner Seiten, die in Kontakt mit der flüssigen Legierung gebracht werden müssen, eine verbleibende Offenporigkeit besitzt.

21. Verfahren nach einem der Ansprüche von 1 bis 16, dadurch gekennzeichnet, daß der erste Bewehrungsbestandteil kontinuierlich in Form eines langgestreckten Faserproduktes auf Basis von Kohlenstoff oder Karbiden oder Siliciumcarbid oder jeglichen feuerfesten Materials, beschichtet mit Kohlenstoff oder Karbiden, eingesetzt wird, welche unter leichter mechanischer Spannung verlagert werden in einem Défilement in einem ersten Schritt in einem Lösungsbad oder Suspensionsbad für die Vorbehandlung (2″), das mindestens das genannte fluorierte Mittel (3) enthält, danach kontinuierlich in einen Ofen (5′) und in einer zweiten Etappe die so vorbehandelte und getrocknete faserige Bewehrung von dem zweiten Bestandteil (9) imprägniert wird (7′) durch kontinuierliches Défilement in eine Wanne, welche die Leichtlegierung, verflüssigt gehalten, enthalt, wonach das Verbundprodukt (10) auf einen gegebenen Querschnitt gebracht wird mittels Durchlauf durch ein entsprechendes Verformungsmittel (11) unmittelbar am Auslaß der genannten Wanne.

22. Verfahren nach Anspruch 21, dadurch gekennzeichnet, daß man die Defiliergeschwindigkeit des ersten faserigen Bestandteils auf einen Wert derart einstellt, daß die Operation der Vorbehandlung (2″) in den Zwischenräumen und auf der Oberfläche dieses ersten Bestandteils eine Menge an fluoriertem Mittel hinterläßt, die gerade ausreicht für die Benetzung, ohne jedoch zum Vorhandensein von Einschlüssen zu führen und derart, daß die Penetration infolge Kapilarität des flüssigen Metalls in die Poren und Zwischenräume der genannten vorbehandelten ersten Komponente im wesentlichen vollständig ist.

23. Verfahren nach Anspruch 22, dadurch gekennzeichnet, daß die Defiliergeschwindigkeit zwischen 0,1 m/min. und 1 m/min. liegt.

24. Verfahren nach einem der vorangehenden Ansprüche, dadurch gekennzeichnet, daß Leichtlegierung (9) eine Legierung auf Aluminiumbasis ist.

25. Verbundteile (10) realisiert durch das Verfahren gemäß einem der Ansprüche von 17 bis 20 oder hergestellt durch plastische Deformation unter Erwärmung in halbflüssiger Phase oder flüssiger Phase, ausgehend von faserigen Halbzeugen, hergestellt gemäß den Ansprüchen 21 bis 23.

FIG.1

0 105 890

FIG.2

FIG.3

COMPOSANT 1 :
MECHE, RUBAN ou TISSU
BOBINES

1"

COMPOSANT 2 :
ALLIAGE BASE
ALUMINIUM

9

PRETRAITEMENT DU
COMPOSANT 1 PAR
UN AGENT FLUORE

2"

SECHAGE DU
COMPOSANT 1
PRETRAITE EN 3

5'

IMPREGNATION DE 1
PAR 2

7'

AGENT FLUORE

3

CALANDRAGE ET
STOCKAGE

11,12

3

0 105 890

FIG . 4

0 105 890